# NEW EUROPEAN PATENT SPECIFICATION

(11) **EP 0 558 331 B2**
(45) Date of publication and mention of the opposition decision: **03.11.1999**
(45) Mention of the grant of the patent: 21.08.1996
(21) Application number: 93301448.2
(22) Date of filing: 26.02.1993
(51) Int. Cl.: H05K 11/02, B60R 11/02

(54) **Detachable apparatus for automotive audio equipment**
Abnehmbares Gerät für Autoradio
Appareil démontable pour un équipement audio automobile

(30) Priority: 27.02.1992 JP 7637492
(43) Date of publication of application: 01.09.1993
(73) Proprietor: SONY CORPORATION, Tokyo (JP)
(72) Inventor: Kawamura, Masateru, c/o Sony Corporation, Tokyo (JP)
(74) Representative: Nicholls, Michael John

(56) References cited:
- EP-A- 0 332 793
- AT-B- 168 374
- GB-A- 2 212 334
- Zeitschrift 'GRUNDIG TECHNISCHE INFORMATIONEN', Heft 1/2-84, pages 73-82, H.Sinning, G.Berger: 'WKC 3858VD-Ein Vollstereo-,4-Endstufen-,Synthesizer-Autoradio mit Reverse-Laufwerk und Dolby-B-NR'

## Description

The present invention relates to a detachable apparatus for automotive equipment in which automotive equipments, e.g., automotive audio equipments such as a car stereo having a detachable front panel including electronic parts such as a liquid crystal display (hereinafter referred to as an LCD) on a front surface of a body can be detachably attached to a dashboard of a car.

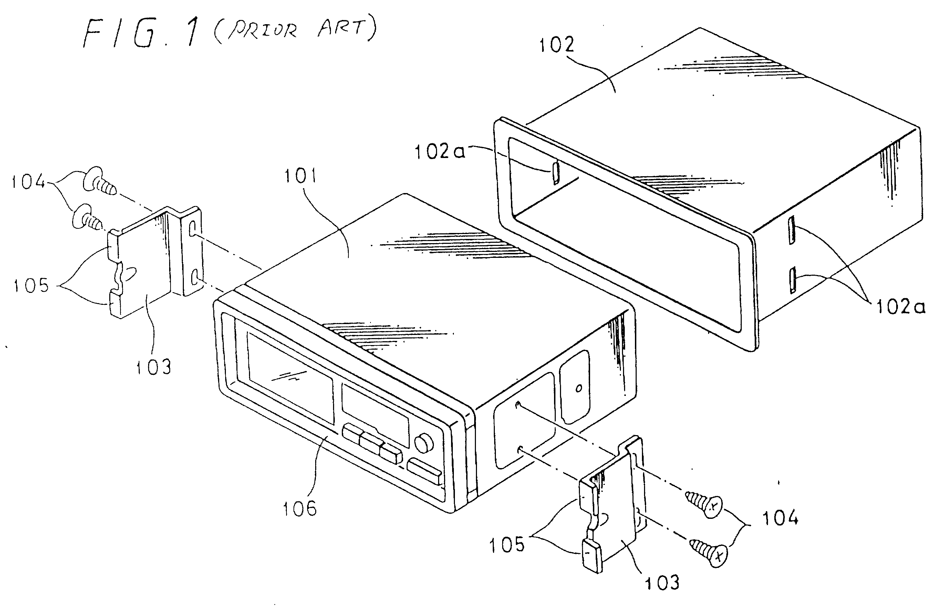

FIG 1. of the accompanying drawings shows a conventional detachable apparatus for attaching this kind of automotive equipment to a dashboard of a vehicle.

Referring to FIG. 1, there is shown a car stereo body 101 which is accommodated into and secured to an attachment frame 102 whose front wall is opened. This attachment frame 102 is supported to a concave portion of a dashboard (not shown). Base end portions of resilient lock plates 103, 103 are secured to left and right side walls of the car stereo body 101 by means of two pairs of screws 104, 104. Two nail portions 105, 105 which are outwardly bent are formed on the free ends of these lock plates 103, 103, respectively. Reference numeral 106 depicts a detachable front panel that is atached to the front wall of the car stereo body 101.

When the conventional car stereo body 101 thus arranged is attached to the attachment frame 102, wires (not shown) drawn out from the attachment frame 102 mounted on the concave portion of the dashboard (not shown) are connected to the car stereo body 101. Then; the user fixes the lock plates 103, 103, prepared as accessories of the car stereo body 101, to the side walls of the car stereo body 101 by screws 104, 104 and the car stereo body 101 is inserted into the attachment frame 102. At that time, the lock plates 103, 103 that are attached to the let and right side walls of the car stereo body 1 are flexed and the nail portions 105, 105 are slid while being urged against the inner wall surface of the attachment frame 102. Then, when the nail portions 105, 105 of the lock plates 103 reach engagement apertures 102a, 102a formed on the side walls of the attachment frame 102, the lock plates 103 are resiliently restored so that the nail portions 105, 105 are engaged with the engagement apertures 102a, 102a, thus the attachment of the car stereo body 101 to the attachment frame 102 being completed.

When the car stereo body 101 supported to the attachment frame 102 is detached, the front panel 106 is detached from the front wall of the car stereo body 101 and the lock plate 103 is inwardly flexed by some suitable means such as a tool or the like inserted from left or right spacing between the car stereo body 101 and the attachment frame 102 to thereby release the nail portion 105 from the engagement aperture 102a. Under this condition, the car stereo body 101 can be taken out and detached from the attachment frame 102.

Further, the convention earth connection for preventing a static electricity from a human body from being charged on an LCD (liquid crystal display) of the car stereo having a detachable front panel and the peripheral portions is carried out as follows. That is, an LCD support member that supports the LCD is introduced into a control base plate on which electronic parts such as a switch or the like are mounted. Such LCD support member is extended to a connector of the front panel through a pattern circuit of the control base plate so that the LCD support member is grounded through the car stereo body at its connector to which the connector of the front panel is connected to the chassis of the car stereo body.

However, in the conventional detachable apparatus for automotive equipment thus arranged, there are required two lock plates 103, 103 that are attached to the left and right side walls of the car stereo body 101. Also, there are required the two pairs of screws 104, 104 that are used secure the lock plates 103, 103 to the left and right side walls of the car stereo body 101. Therefore, the number of accessory assembly parts is unavoidably increased and the number of processes required when the user attaches the car stereo body 101 to the attachment frame 102 is also increased. Accordingly, it takes plenty of time for the user to attach the car stereo body 101 to the attachment frame 102.

AT-B-168 374 discloses a radio mounted on a car and locked by a mechanism accessable through a front aperture.

Therefore, it is an object of the present invention to provide an improved detachable apparatus for automotive equipment in which the aforesaid shortcomings and disadvantages encountered with the prior an can be eliminated.

According to the present invention, there is provided apparatus for the detachable mounting of automotive equipment in accordance with claim 1.

A particular embodiment of the invention can provide a detachable apparatus for automotive equipment which comprises an equipment body having a front surface panel frame, an accommodation portion into which the equipment body is accommodated with a substantially precise positioning, a lock member formed of an operation portion attached to the inside of a frame body of the equipment body, the operation portion being deformable with resiliency and an engagement portion projected to the outside of the frame body and being engaged with an engaged portion formed on an inner wall portion of the accommodation portion, a lock releasing aperture bored through the front surface panel frame of the equipment body in association with the operation portion, and a lock releasing key inserted into the lock releasing aperture, urged against the operation portion and thereby being flexed to disengage the engagement portion from the engaged portion of the accommodation portion.

Thus with the invention the number of accessory assembly parts can be reduced considerably and a car stereo body can be attached to a car dashboard with ease reliably.

Furtherthe number of attaching processes and time required for such attachment work can be reduced considerably while the equipment can be produced inexpensively.

The present invention will be further described in the following detailed description of an illustrative embodiment thereof to be read in conjunction with the accompanying drawings, in which like reference numerals are used to identify the same or similar parts in the several views, and in which:
Fig. 1 is an exploded perspective view showing a conventional detachable apparatus for automotive audio equipment;
Fig. 2 is an exploded perspective view showing a main portion of a car stereo according to an embodiment of the present invention;
Fig. 3 is a cross-sectional view showing a main portion of the attached state of a car stereo body according to the embodiment of the present invention;
Fig. 4 is a cross-sectional view showing the car stereo body and a front panel in its disassembled state according to the embodiment of the present invention;
Fig. 5 is a cross-sectional view showing the front panel according to the embodiment of the present invention;
FIG. 6 is a cross-sectional view showing a main portion of the car stereo body during the lock releasing operation according to the embodiment of the present invention;
FIG. 7 is a perspective view showing a lock plate according to the embodiment of the present invention;
FIG. 8 is a perspective view showing another example of the lock plate according to the embodiment of the present invention; and
FIG. 9 is a plan view showing the lock releasing state of the car stereo body according to the embodiment of the present invention in a fragmentarily cross-sectional fashion.

The present invention will now be described with reference to the drawings.

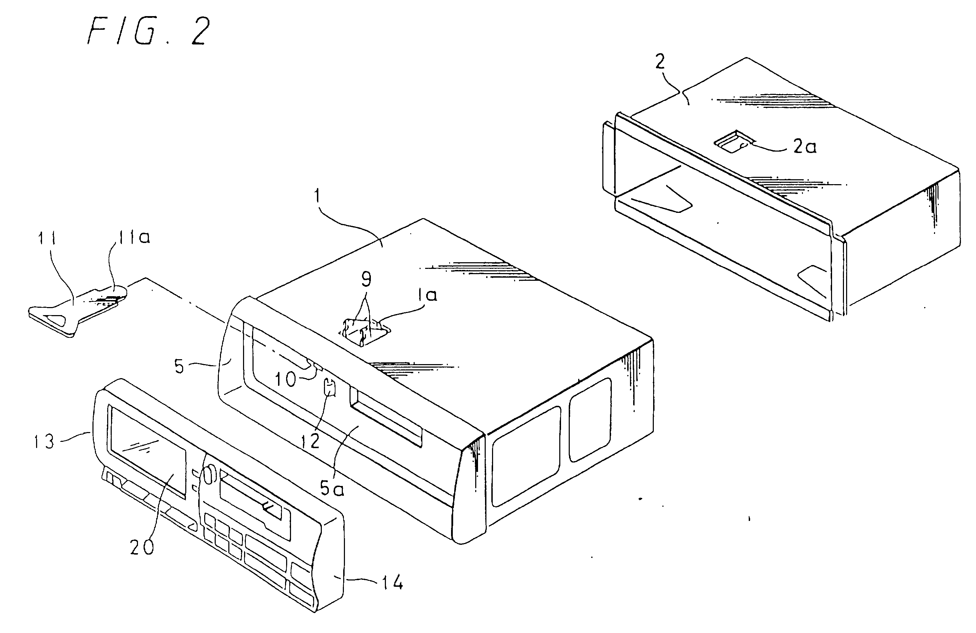

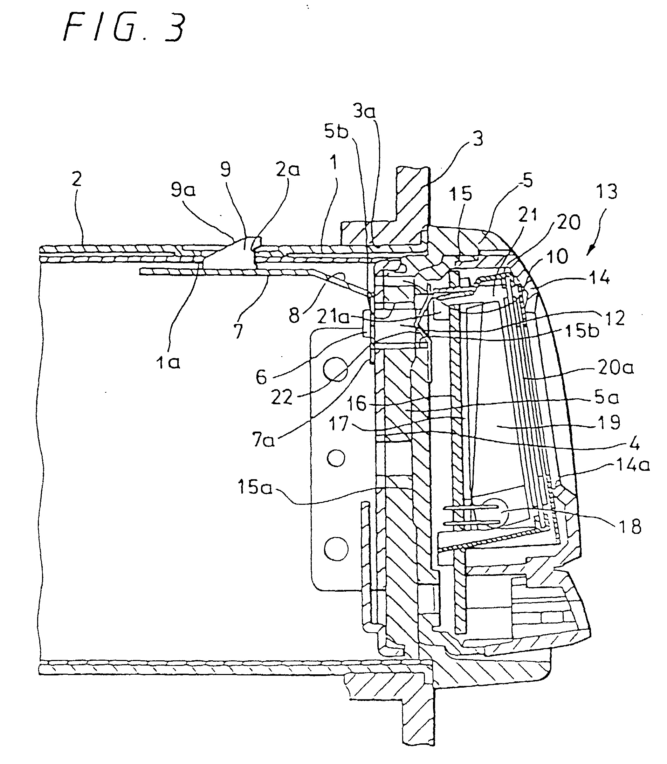

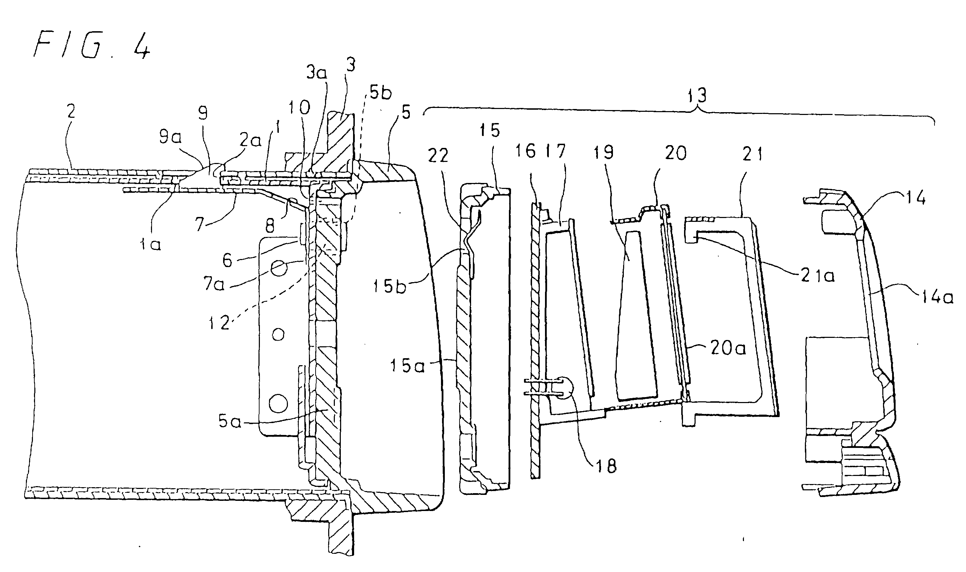

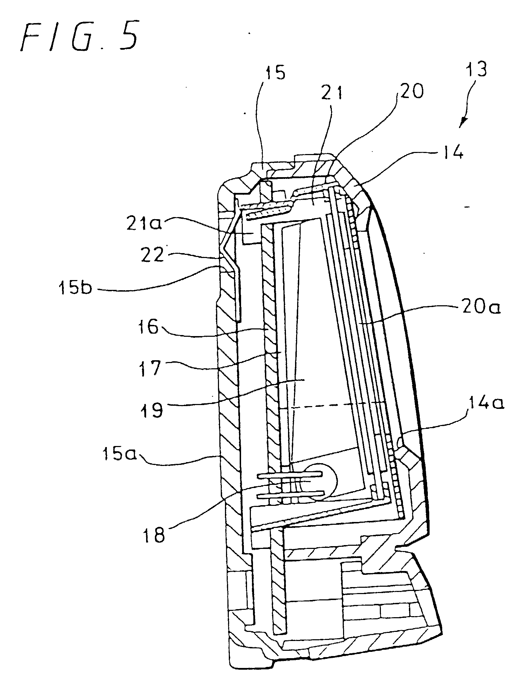

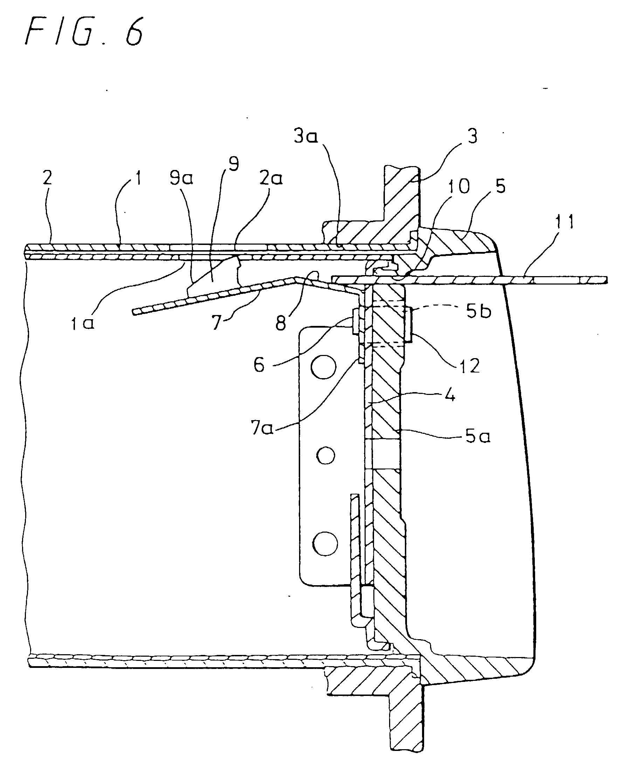

FIG. 2 is an exploded perspective view showing a main portion of a structure of a detachable apparatus for automotive equipment according to the present invention. In this embodiment, as an automotive equipment, there is utilized a car stereo that has a detachable front panel. FIG. 3 is a cross-sectional view showing the condition that the front panel is attached to the car stereo body. FIG. 4 is a cross-sectional view of the car stereo body and the disassembled state of the front panel. FIG. 5 is a cross-sectional view showing the assembled state of the front panel. FIG. 6 is a cross-sectional view of a main portion under the condition that the locking state of the car stereo is being released. In this case, equipments and devices incorporated within the car stereo are not shown.

Throughout the figures, reference numeral 1 designates a car stereo body and 2 an attachment frame serving as an accommodation portion into which the car stereo body 1 is accommodated and secured with a substantially precise positioning. The attachment frame 2 is attached in advance to a concave portion 3a formed on a dashboard 3 of vehicle before the car stereo body 1 is attached. To the front opening portion of the car stereo body 1, there is secured a chassis 4 serving as a frame body by some suitable means such as screws (not shown) or the like. A front surface panel frame 5 is secured to the chassis 4 by screws (not shown) and the front surface panel frame 5 is attached to the front wall of the car stereo body 1.

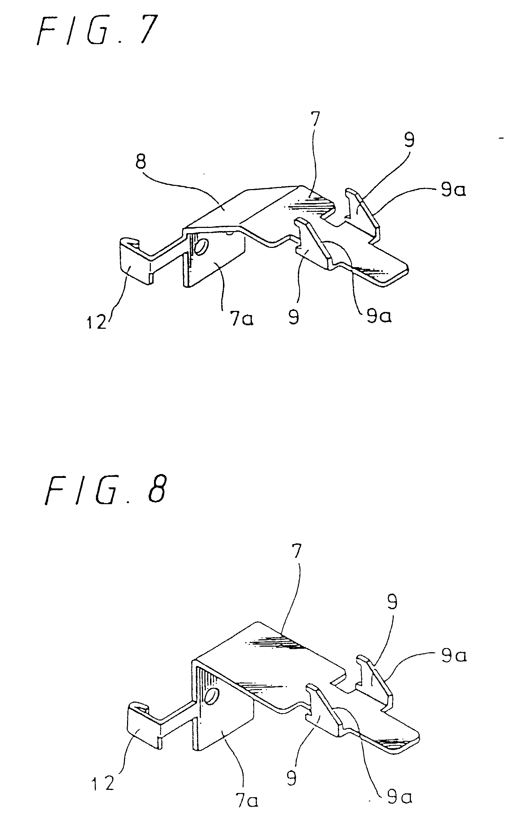

A lock plate 7 serving as a lock member operation portion is supported at its one end attachment portion 7a by a screw 6 on the rear wall of substantially a central portion of the upper portion of the front surface plate 5a of the front surface panel frame 5 so as to extend in the rearward. The lock plate 7 can be flexibly deformed in the upper and lower direction and an inclined surface 8 is formed on one portion of the lock plate 7. On the free end side of the lock plate 7, there are erected two nail portions 9, 9 which serve as engagement portions from both side edge portions as shown in FIG. 7. Inclined surfaces 9a, 9a rearwardly inclined are formed on the rear portions of both nail portions 9, 9. The inclined nail portions 9a, 9a are projected through an aperture 1a formed through the upper surface plate of the car stereo body 1 and then engaged with an engagement aperture 2a serving as engaged portion formed on the upper wall surface of the attachment frame 2. The lock plate 7 has a positioning rotation preventing member 12 of a substantially L-letter configuration in transverse cross section extended on one side end edge. The top portion of the rotation preventing member 12 is inserted into an engagement aperture 5b which is extended through the front surface plate 5a of the front surface panel frame 5 from the chassis 4 to thereby prevent the lock plate 7 from being rotated. The rotation preventing member 12 is also served as an earth terminal of a front panel 13 which will be described later on.

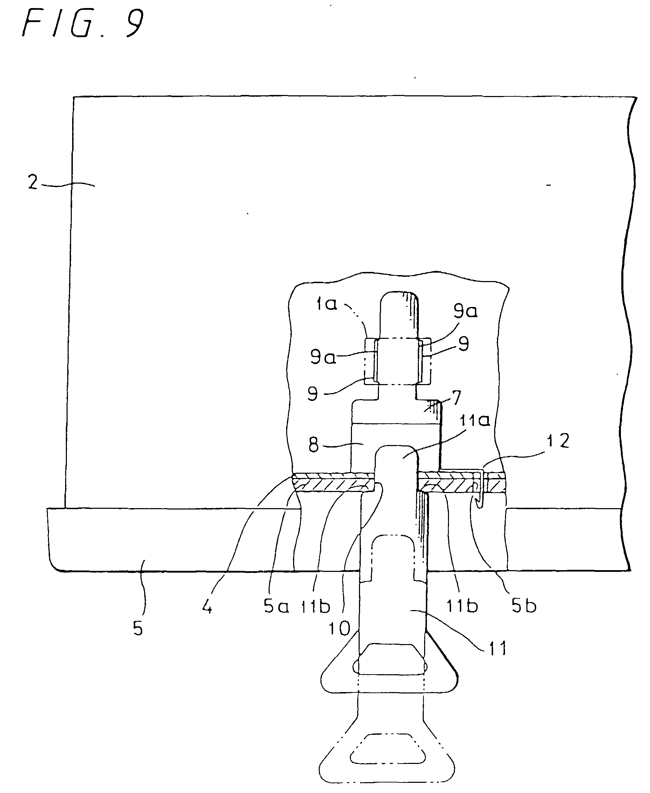

On the upper portion of the front surface plate 5a of the front surface panel frame 5, there is formed a lock releasing aperture 10 at the portion corresponding to the inclined surface 8a of the lock plate 7. A thin top portion 11a of the lock releasing key 11 is inserted into the lock releasing aperture 10, whereby the nail portion 9 of the lock plate 7 can be disengaged from the engagement aperture 2a of the accommodation portion 2. The lock releasing key 11 has a base stepped portion 11b of the top portion 11a to come in contact with the front surface plate 5a of the front surface panel frame 5 so that the lock releasing key 11 cannot be inserted more than ever, thereby protecting the equipments within the car stereo body 1 from being damaged, as shown in FIG. 9.

A front panel, generally designated by reference numeral 13, can be detachably attached to the front surface panel frame 5. The front panel 13 can be detached by the user in order to prevent a burglary of the car stereo body 1. The front panel 13 has a housing formed of a front panel portion 14 and a front back panel portion 15. To the front back panel portion 15, there are assembled a control base plate 16 on which electronic parts such as a switch or the like are mounted, a holder 17, a lamp 18, a light introducing plate 19, an LCD 20 serving as an electronic element and an LCD support member 21 made of a conductive material and having a leg portion 21a serving as a support member of the LCD 20, in that order. On the rear surface plate 15a of the front back panel 15, there is attached a resilient earth plate 22 of substantially C-letter configuration. The earth plate 22 is opposed to an opening aperture 15b formed through the rear surface plate 15a of the front back panel 15.

To the front back panel 15, there are assembled the control base plate 16, the holder 17, the lamp 18, the light introducing plate 19, the LCD 20 and the LCD support member 21. FIG. 5 shows a cross-sectional view of the front panel 13 in which the front back panel 15 is secured to the front panel 14 by screws (not shown). The front panel 13 thus arranged is brought in surface contact with the front peripheral portion of the LCD 20 by the LCD support member 21 made of a conductive material. A display portion 20a of the LCD 20 is opposed to a display window 14a of the front panel portion 14a. The leg portion 21a of the LCD support member 21 is urged against the resilient earth plate 22 attached to the front back panel 15. Although the earth plate 22 urged against the leg portion 21a of the LCD support member 21 is flexed in the rearward, the earth plate 22 can be prevented from being projected from the opening aperture 15b toward the outside. The reason for this is that, when the user handles the front panel 13, the user can be prevented from touching the earth plate 22 with hands and finger from a safety standpoint.

FIG. 3 is a cross-sectional view showing the condition that the front panel 13 thus arranged is attached to the front surface panel frame 5 of the car stereo body 1 by means of connectors (not shown). When the front panel 13 is attached to the car stereo body 1, the earth plate 22 opposing the opening aperture 15b of the front back panel 15 and a contact member 12 projected from a window aperture 5b formed through the front surface plate 5a of the fronts surface panel frame 5 of the car stereo body 1 can be urged against with each other under a spring force. The earth plate 22 and the contact member 12 are urged against with each other with a spring-biasing force so that, even when the front panel 13 is wobbled relative to the car stereo body 1 due to a vibration of the car or the like, the earth plate 22 can be prevented from being detached from the contact member 12.

How to remove static electricity from the LCD 20 of the car stereo thus arranged will be described below.

When the front panel portion 14 is operated, it is frequently observed that a static electricity from a human body is directly in contact with the display surface 20a of the LCD 20. Consequently, the LCD 20 and the peripheral portions are charged by the static electricity. If the charged state of static electricity is left as it is, a malfunction of the LCD 20 occurs as earlier noted. Therefore, the static electricity on the LCD 20 and the peripheral portions is introduced into the LCD support member 21. Then, the introduced static electricity is flowed from the leg portion 21a of the LCD 21 to the earth plate 22 urged against the leg portion 21a and grounded to the chassis 4 of the car stereo body 1 through the rotation preventing member 12 of the car stereo body 1 urged against the earth plate 22 from the lock plate 7 molded integrally with the rotation preventing member 12.

According to the above-mentioned arrangement, the car stereo electrification preventing mechanism can be realized by the shortest earth circuit without using the connectors of the front panel 13 and the car stereo body 1 and the pattern circuit of the control base plate 16 on the front panel 13 side. Therefore, a potential difference due to the increase of resistance value can be avoided and a reliable earth effect which can avoid the malfunction of the LCD 20 can be achieved. Accordingly, the electrification preventing mechanism of high reliability can be provided in which the number of connector contacts for the earth circuit can be reduced unlike the prior art and a restriction on the design of the pattern circuit of the control base plate 16 can be removed.

A detachable operation of the detachable apparatus for automotive audio equipment thus arranged will be described. Under the attached condition that the car stereo body 1 is accommodated within the accommodation portion 2, as shown in FIG. 3, the nail portion 9 of the lock plate 7 is engaged with and secured to the engagement aperture 2a of the accommodation portion 2. When the car stereo body 1 is ejected from the accommodation portion 2 under this state due to some reasons such as a trouble of the like, the front panel 13 is disengaged from the front surface panel frame 5. Then, the lock releasing key 11 is horizontally inserted into the lock releasing aperture 10 formed through the front surface plate 5a of the front surface panel frame 5, whereby the inclined surface 8 of the lock plate 7 is pressed by the too portion 11a of the lock releasing key 11. As a consequence the lock plate 7 is downwardly deformed with a flexibility as shown in FIG. 6 so that the nail portion 9 is disengaged from the engagement aperture 2a of the accommodation portion 2. When the car stereo body 1 is drawn from the accommodation portion 2 under the condition that the nail portion 9 is disengaged from the engagement aperture 2a the nail portion 9 is moved along the upper inner wall of the accommodation portion 2, whereby the car stereo body 1 can be ejected from the accommodation portion 2.

When the car stereo body 1 is accommodated into the accommodation portion 2 one more time, the car stereo body 1 in which the lock releasing key 11 is extracted from the lock releasing aperture 10 is inserted into the accommodation portion 2, whereby the lock plate 7 is downwardly deformed with a flexibility because the inclined surface 8 of the nail portion 9 is brought in contact with and pressed by the mouth edge of the opening portion of the accommodation portion 2. As a result, the nail portion 9 is moved along the upper inner wall of the accommodation portion 2, so that, when the nail portion 9 reaches the engagement aperture 2a of the accommodation portion 2 the lock plate 7 is resiliently restored so that the nail portion 9 is pushed upwardly and engaged with the engagement aperture 2a, thereby the car stereo body 1 being secured within the accommodation portion 2. Thereafter the front panel 13 is attached to the front surface panel frame 5 and the attachment operation is ended.

In the thus arranged detachable apparatus for automotive audio equipment, when the user removes the front panel 13 from the front surface panel frame 5 under the condition that the car stereo body 1 is in use, the car stereo body 1 itself can be made inconspicuous, which can protect the car stereo body 1 from the burglary. Further, the car stereo body 1 having no front panel 13 attached thereon cannot function as a car stereo at all. In addition, the car stereo body 1 cannot be detached from the accommodation portion 2 without the lock releasing key 11 and therefore the car stereo body 1 can be protected from the burglary. Furthermore, since the nail portions 9,9 of the lock plate 7 are ejected from the free end sides of the lock plate 7, the nail portion 9 can be strongly engaged with the engagement aperture 2a of the accommodation portion 2. Therefore, it is impossible to detach the car stereo body 1 from the accommodation portion 2.

The detachable apparatus for automotive equipment thus arranged has a simple structure formed of the lock plate 7 having the nail member 9, one screw 7 that attaches the lock plate 7 to the chassis 4, and the engagement apenure 2a formed in the accommodation portion 2 so as to be engaged with the nail portion 9 of the lock plate 7. Further the lock plate 7 is attached to the car stereo body 1 in the beginning of the assembly process of the car stereo body 1, and the car stereo body 1 can be detached from the accommodation portion 2 with ease by the lock releasing key 11. Thus, the number of assembly parts of the detachable apparatus can be reduced considerably and a fraction defective of the parts can be reduced, which can reduce a manufacturing cost of the apparatus. Also, since the number of assembly parts can be reduced, a packaging of product can be simplified. Further, the number that the user attaches and detaches the car stereo body 1 to and from the accommodation portion 2 can be reduced and a time required by the user for such work can be reduced.

While the lock plate 7 has the inclined surface 8 with which the lock releasing key 11 comes in contact as described above, the present invention is not limited thereto and the lock plate 7 may be formed as a flat-shaped lock plate having no inclined surface as shown in FIG. 8. In that case, if the top portion of the lock releasing key 11 inserted from the lock releasing aperture 10 is inclined a little downwardly, then the lock plate 7 can be resiliently deformed in the lower direction with ease.

While the car stereo body 1 is accommodated within the accommodation potion 2 that is attached to the dashboard as described above, the present invention is not limited thereto and the car stereo body 1 may be accommodated within an accommodation portion that is directly formed in the dashboard and the engagement aperture that engages with the nail portion of the lock plate may be bored through the wall surface of this accommodation portion.

The present invention is not limited to the above embodiment and various changes and modifications are made possible without departing from the gist of the present invention. For example, while the rotation preventing member 12 is employed as the contact member as described above, the contact member may not always be molded unitarily with the lock plate. The contact member may be formed independently of the lock plate 7 so long as it is connected to the chassis 4 of the car stereo body 1.

Further, while the lock plate 7 is formed on the upper portion of the car stereo body 1 in the detachable apparatus for automotive equipment, the present invention is not limited thereto and the lock plate 7 may be formed on the lower portion of side portion of the car stereo body 1.

Further, the lock plate 7 is incorporated within the car stereo body 1 as described above but the present invention is not limited thereto. Therefore, the lock plate 7 may be formed on the attachment frame 2 side and the engagement aperture 2a that engages with the nail portion 9 of the lock plate 7 may be formed on the car stereo body 1 side. Further, the engagement portion of the lock plate 7 is not limited to the nail portion 9 and may be formed as a protrusion. Furthermore, while the car stereo is described as the automotive equipment as described above, the present invention is not limited thereto and may be applied to a wide variety of automotive equipments.

As described above, according to the detachable apparatus for automotive equipment, under the condition that the equipment body is accommodated within the accommodation portion, the engagement portion of the lock member attached to the equipment body is extended through the frame body of the equipment body and engaged with and secured to the engaged portion of the accommodation portion. Further, by the lock releasing key inserted from. a lock releasing aperture bored through the front surface panel frame formed on the equipment body, the operation portion is flexed to disengage the engagement portion of the lock member from the engaged portion of the accommodation portion, whereby the equipment body can be detached from the accommodation portion. Therefore, the number of assembly parts of the detachable apparatus can be reduced considerably and a fraction defective can be reduced. Further, since the number of assembly parts can be reduced, the packaging of product can be simplified, which can therefore make the automotive equipment inexpensive. Furthermore, the number of process and the time of the process in which the user attaches and detaches the equipment body to and from the dashboard of the car can be reduced.

Having described a preferred embodiment of the invention with reference to the accompanying drawings, it is to be understood that the invention is not limited to that precise embodiment and that various changes and modifications could be effected therein by one skilled in the art without departing from the scope of the invention as defined in the appended claims.

## Claims

1. Apparatus for the detachable mounting of automotive equipment, comprising;
an equipment body (1);
an accommodation portion (2) for detachably accommodating the equipment body (1);
a lock (7, 8, 9, 2a) for detachably locking the equipment body (1) in the accommodation portion (2);
the lock (7, 8, 9, 2a) comprising an engagement portion (9) on one of the equipment body (1) and accommodation portion (2) and engageable with an engaging portion(2a) in the other of the equipment body (1) and accommodation portion (2) to lock the equipment body (1) in the accommodation portion (2);
the lock (7, 8, 9, 2a) further comprising an operation portion (8);
a lock releasing aperture (10) providing access to said operation portion (8) from the outside of the apparatus when the equipment body (1) is in the accommodation portion (2); and
a lock releasing key (11) adapted for insertion into the lock releasing aperture (10) and to engage the operation portion (8) to resiliently deform the lock (7, 8, 9, 2a) to release the engagement portion (9) from the engaging portion (2a) allowing removal of the equipment body (1) from the accommodation portion (2),
characterized in that said lock releasing aperture (10) is closed by a user-detachable front panel (13) attachable to the front surface of the equipment body (1) and in that said front panel (13) incorporates therein an electronic element (20) and a support member (21) for said electronic element (20), and said front panel (13) includes an earth terminal (22) which resiliently contacts with a leg portion of said support member (21), whereby charges around said electronic element (20) are grounded through said earth terminal (22) to said equipment body.

2. Apparatus according to claim 1, wherein the engagement portion (9) is on the equipment body (1).

3. Apparatus according to claim 2, wherein the lock comprises a lock member (7) comprising the operation portion (8) attached to the inside of a frame body of said equipment body (1) and resiliently deformable under action of the lock releasing key (11), and the engagement portion (9) projecting outside of said frame body for engagement with said engaging portion (2a) formed on an inner wall portion of said accommodation portion (2).

4. Apparatus according to claim 1, 2 or 3, wherein the lock releasing aperture is provided in a front surface panel of said equipment body (1).

5. Apparatus according to any one of the preceding claims, wherein said operation portion (8) of said lock has an inclined surface a portion of which contacts in use said lock releasing key (11).

6. Apparatus according to any one of the preceding claims, wherein said lock (2a, 7, 8, 9) has an end portion (12) extended from an opening portion extended through a front surface plate of a front surface panel frame (5) of the equipment body (1) and said end portion of said lock (2a, 7, 8, 9) can be brought in contact with said earth terminal (22) provided on said front panel (13) under the condition that said front panel (13) is attached to said front surface panel frame (5).

7. Apparatus according to any one of the preceding claims, wherein the accommodation portion (2) comprises a frame mountable on an automobile.

8. Apparatus according to any one of claims 1 to 6, wherein the accommodation portion (2) is an integral part of a dashboard of an automobile.

## Patentansprüche

1. Gerät zur abnehmbaren Befestigung einer Kraftfahrzeugausrüstung, welches umfaßt:
ein Ausrüstungsgehäuse (1);
ein Unterbringungsteil (2) zur abnehmbaren Unterbringung des Ausrüstungsgehäuses (1);
eine Verriegelung (7, 8, 9, 2a) zur abnehmbaren Befestigung des Ausrüstungsgehäuses (1) im Unterbringungsteil (2);
wobei die Verriegelung (7, 8, 9, 2a) ein Eingriffsteil (9) entweder auf dem Ausrüstungsgehäuse (1) oder dem Unterbringungsteil (2) aufweist und mit einem Eingriffsbereich (2a) im anderen entweder des Ausrüstungsgehäuses (1) oder des Unterbringungsteils (2) in Eingriff kommen kann, um das Ausrüstungsgehäuse (1) im Unterbringungsteil (2) zu verriegeln;
wobei die Verriegelung (7, 8, 9, 2a) außerdem ein Betätigungsteil (8) aufweist;
eine Entriegelungsöffnung (10), die einen Zugriff zum Betätigungsteil (8) von der Außenseite des Geräts bereitstellt, wenn sich das Ausrüstungsgehäuse (1) im Unterbringungsteil (2) befindet; und
einen Entriegelungsschlüssel (11), der sich zur Einführung in die Entriegelungsöffnung (10) eignet und an dem Betätigungsteil (8) angreift, um die Verriegelung (7, 8, 9, 2a) federnd zu deformieren, um das Eingriffsteil (9) vom Eingriffsbereich (2a) zu lösen, wodurch die Entfernung des Ausrüstungsgehäuses (1) aus dem Unterbringungsteil (2) ermöglicht wird,
dadurch gekennzeichnet, daß
die Entriegelungsöffnung (10) durch eine benutzerentfernbare Frontplatte (13) verschlossen ist, die auf der Frontfläche des Ausrüstungsgehäuses (1) befestigbar ist, und daß die frontplatte (13) ein elektronisches Element (20) und ein Lagerteil (21) für das elektronische Element (20) beherbergt, und das Ausrüstungsgehäuse (1) einen Erdanschluß (22) aufweist, der federnd mit einem Fuß des Lagerteils (21) in Kontakt steht, wodurch Ladungen im Bereich des elektronischen Elements (20) über diesen Erdanschluß (22) auf das Ausrüstungsgehäuse an Erde (Masse) gelegt sind.

2. Gerät nach Anspruch 1, wobei das Eingriffsteil (9) sich auf dem Ausrüstungsgehäuse (1) befindet.

3. Gerät nach Anspruch 2, wobei die Verriegelung ein Verriegelungsteil (7) aufweist, das das Betätigungsteil (8) umfaßt, welches an der Innenseite eines Rahmens des Ausrüstungsgehäuses (1) befestigt ist und unter der Wirkung des Entriegelungsschlüssels (11) federnd deformierbar ist, und das Eingriffsteil (9), cias sich auf die Außenseite des Rahmens erstreckt, um in den Eingriffsbereich (2a) einzugreifen, welcher auf einem Innenwandbereich des Unterbringungsteils (2) gebildet ist.

4. Gerät nach Anspruch 1, 2 oder 3, wobei die Entriegelungsöffnung in einer Frontflächenplatte des Ausrüstungsgehäuses (1) vorgesehen ist.

5. Gerät nach einem der vorhergehenden Ansprüche, wobei das Betätigungsteil (8) der Verriegelung eine geneigte Oberfläche besitzt, von der ein Teil den Entriegelungsschlüssel (11) bei Verwendung kontaktiert.

6. Gerät nach Anspruch einem der vorhergehenden Ansprüche, wobei die Verriegelung (2a, 7, 8, 9) ein Endteil (12) besitzt, das sich von einem Öffnungsbereich aus erstreckt, der sich durch eine Frontflächenplatte eines Frontoberflächenverkleidungsrahmens (5) des Ausrüstungsgehäuses (1) erstreckt, und das Endteil der Verriegelung (2a, 7, 8, 9) mit dem Erdanschluß (22) in Kontakt gebracht werden kann, der auf der Frontplatte (13) vorgesehen ist, unter der Voraussetzung, daß die Frontplatte (13) am vorderen Frontoberflächenverkleidungsrahmen (5) befestigt ist.

7. Gerät nach einem der vorhergehenden Ansprüche, wobei das Unterbringungsteil (2) einen Rahmen aufweist, der in einem Kraftfahrzeug befestigbar ist.

8. Gerät nach einem der Ansprüche 1 bis 6, wobei das Unterbringungsteil (2) ein integrales Teil eines Armaturenbretts eines Kraftfahrzeugs ist.

## Revendications

1. Appareil pour montage de façon séparable d'équipement d'automobile, comprenant :
un corps (1) d'équipement ;
une portion (2) pour adapter de façon séparable le corps (1) d'équipement ;
un dispositif d'encliquetage (7, 8, 9, 2a) pour encliqueter de façon séparable le corps (1) d'équipement dans la portion (2) d'adaptation ;
le dispositif d'encliquetage (7, 8, 9, 2a) comprenant une portion (9) d'engagement sur l'un des corps (1) d'équipement et portion (2) d'adaptation, et engageable avec une portion (2a) d'engagement dans l'autre des corps (1) d'équipement et portion (2) d'adaptation afin d'encliqueter le corps (1) d'équipement dans la portion (2) d'adaptation ;
le dispositif d'encliquetage (7, 8, 9, 2a) comprenant de plus une portion (8) de fonctionnement ;
un orifice (10) de libération d'encliquetage procurant un accès à ladite portion (8) de fonctionnement, depuis l'extérieur de l'appareil, lorsque le corps (1) d'équipement est dans la portion (2) d'adaptation ; et
une clé (11) de libération d'encliquetage, adaptée pour insertion dans l'orifice (10) de libération d'encliquetage et pour engager la portion (8) de fonctionnement, afin de déformer de façon élastique le dispositif d'encliquetage (7, 8, 9, 2a), afin de libérer la portion (9) d'engagement de la portion (2a) d'engagement, permettant l'enlèvement du corps (1) d'équipement de la portion (2) d'adaptation,
caractérisé en ce que ledit orifice (10) de libération d'encliquetage est clos par un panneau (13) frontal, séparable par l'utilisateur, susceptible d'être fixé à la surface frontale du corps (1) d'équipement,
et en ce que ledit panneau (13) frontal incorpore en lui un élément (20) électronique, et un élément (21) de support pour ledit élément (20) électronique et ledit panneau (13) frontal inclut une borne (22) de mise à la terre, qui vient en contact élastiquement avec une portion de branche dudit élément (21) de support, grâce à quoi des charges autour dudit élément (20) électronique sont mises à la masse, à travers ladite borne (22) de mise à la terre, audit corps d'équipement.

2. Appareil selon la revendication 1, dans lequel la portion (9) d'engagement est sur le corps (1) d'équipement.

3. Appareil selon la revendication 2, dans lequel le dispositif d'encliquetage comprend un élément (7) d'encliquetage comprenant la portion (8) de fonctionnement, fixée à l'intérieur d'un corps de boîtier dudit corps (1) d'équipement et déformable élastiquement sous l'action de la clé (11) de libération d'encliquetage, et la portion (9) d'engagement faisant saillie à l'extérieur dudit corps de boîtier pour engagement avec ladite portion (2a) d'engagement formée sur une portion de paroi intérieure de ladite portion (2) d'adaptation.

4. Appareil selon la revendication 1, 2 ou 3, dans lequel l'orifice de libération d'encliquetage est procuré dans un panneau de surface frontale dudit corps (1) d'équipement.

5. Appareil selon une quelconque des précédentes revendications, dans lequel ladite portion (8) de fonctionnement dudit dispositif d'encliquetage a une surface inclinée, dont une partie est, en utilisation, en contact avec ladite clé (11) de libération d'encliquetage.

6. Appareil selon l'une quelconque des revendications précédentes, dans lequel ledit dispositif d'encliquetage (2a, 7, 8, 9) a une portion (12) d'extrémité étendue à partir d'une portion d'ouverture, étendue à travers une plaque de surface frontale d'un boîtier (5) à panneau de surface frontal du corps (1) d'équipement, et ladite portion d'extrémité dudit dispositif d'encliquetage (2a, 7, 8, 9) peut être amenée en contact avec ladite borne (22) de mise à la terre procurée sur ledit panneau (13) frontal, à la condition que ledit panneau (13) frontal soit fixé audit boîtier (5) à panneau de surface frontal.

7. Appareil selon une quelconque des précédentes revendications, dans lequel la portion (2) d'adaptation comprend un boîtier montable sur une automobile.

8. Appareil selon une quelconque des revendications 1 à 6, dans lequel la portion (2) d'adaptation est une partie intégrale d'un tableau de bord d'une automobile.
